# EUROPÄISCHE PATENTSCHRIFT

(11) **EP 0 756 547 B1**
(45) Veröffentlichungstag und Bekanntmachung des Hinweises auf die Patenterteilung: **26.08.1998**
(21) Anmeldenummer: 95916605.9
(22) Anmeldetag: 05.04.1995
(51) Int. Cl.: B44C 5/04, C09D 167/06, C09D 163/10, C09D 4/06, B41M 3/06

(54) **VERFAHREN ZUR HERSTELLUNG VON GEGENSTÄNDEN MIT DREIDIMENSIONALER OBERFLÄCHENSTRUKTUR**
PROCESS FOR PRODUCING OBJECTS WITH A THREE-DIMENSIONAL SURFACE STRUCTURE
PROCEDE DE PRODUCTION D'OBJETS A STRUCTURE SUPERFICIELLE TRIDIMENSIONNELLE

(30) Priorität: 16.04.1994 DE 4413242
(43) Veröffentlichungstag der Anmeldung: 05.02.1997
(73) Patentinhaber: BASF Coatings Aktiengesellschaft, 48165 Münster (DE)
(72) Erfinder: LAMBERT, Siegfried, D-48165 Münster (DE); DICKERHOF, Karlheinz, D-48317 Drensteinfurt (DE); KRANIG, Wolfgang, D-48308 Senden (DE)
(86) Internationale Anmeldenummer: EP9501235
(87) Internationale Veröffentlichungsnummer: WO9528291

(56) Entgegenhaltungen:
- EP-A- 0 216 269
- EP-A- 0 562 860
- WO-A-89/07785
- DE-A- 4 228 401
- GB-A- 2 229 965
- US-A- 4 146 452
- US-A- 5 271 988

## Beschreibung

Die Erfindung betrifft ein Verfahren zur Herstellung von Gegenständen mit einer dreidimensionalen Oberflächenstruktur, bei dem ein Substrat bedruckt wird, wobei mindestens eine der zur Bedruckung eingesetzten Druckfarben lackabstoßend ist, und das bedruckte Substrat anschließend lackiert wird, sowie nach diesem Verfahren hergestellte Gegenstände.

Verfahren der obenbeschriebenen Art sind bekannt (vgl. beispielsweise DE-A-32 47 677, EP-B-123 252 und EP-A-43 062) und werden insbesondere zur Herstellung von sogenannten Kunststoff-Furnieren eingesetzt. Dazu werden gegebenenfalls imprägnierte Papierfolien mit einer Holzmusterung bedruckt, wobei die verwendeten Druckfarben so ausgewählt werden, daß an den Stellen, an denen dem natürlichen Holz nachempfundene Poren entstehen sollen, lackabstoßende Druckfarben (sogenannte Porendruckfarben) aufgedruckt werden. Die anschließend aufgebrachte Lackschicht weist dann eine sicht- und fühlbare dreidimensionale Oberflächenstruktur auf, die von einer Naturholzoberfläche nur schwer unterscheidbar ist.

Bei den bekannten Verfahren werden zur Lackierung der bedruckten Papierfolien wäßrige, hitzehärtbare Lacke, die als Bindemittel hydroxylgruppenhaltige Harze in Kombination mit Aminoplastharzen enthalten, eingesetzt. Derartige Lacke müssen nachteiligerweise als Zweikomponentensysteme gelagert werden, setzen während des Einbrennens Formaldehyd und andere Spaltprodukte wie z.B. Methanol frei und erfordern Lackieranlagen, die einen hohen Raumbedarf haben.

Die der vorliegenden Erfindung zugrundeliegende technische Aufgabenstellung bestand in der Bereitstellung eines Verfahrens zur Herstellung von Gegenständen mit einer dreidimensionalen Oberflächenstruktur, bei dem ein Substrat bedruckt wird, wobei mindestens eine der zur Bedruckung eingesetzten Druckfarben (die sogenannte Porendruckfarbe) lackabstoßend ist, und das bedruckte Substrat anschließend lackiert wird, bei dem die obenbeschriebenen Nachteile des Standes der Technik nicht bzw. nur in vermindertem Ausmaß auftreten.

Diese Aufgabe wird überraschenderweise durch ein Verfahren zur Herstellung von Gegenständen mit einer dreidimensionalen Oberflächenstruktur, bei dem ein Substrat bedruckt wird, wobei mindestens eine der zur Bedruckung eingesetzten Druckfarben (die sogenannte Porendruckfarbe) lackabstoßend ist, und das bedruckte Substrat anschließend lackiert wird, gelöst, das dadurch gekennzeichnet ist, daß das bedruckte Substrat mit einem strahlenhärtbaren Lack lackiert und die aufgebrachte Lackschicht mit energiereicher Strahlung gehärtet wird, wobei der strahlenhärtbare Lack kein Aminoplastharz enthält und aus
A) 18 bis 99,9, vorzugsweise 49,5 bis 82,5 Gew.% eines Epoxiacrylates, eines Polyetheracrylates oder eines Polyesteracrylates oder einer Mischung aus diesen Acrylaten,
B) 0,1 bis 5,0, vorzugsweise 0,5 bis 1,5 Gew.% einer Brönsted Säure, einem Säureanhydrid, einer Mischung aus Brönsted Säuren, einer Mischung aus Säureanhydriden oder einer Mischung aus mindestens einer Brönsted Säure und mindestens einem Säureanhydrid
C) O bis 12, vorzugsweise 3 bis 6 Gew.% eines Photoinitiators oder einer Mischung aus Photoinitiatoren
D) 0 bis 40, vorzugsweise 5 bis 15 Gew.% Wasser oder mindestens eines organischen Lösemittels oder einer Mischung aus Wasser und mindestens einem organischen Lösemittel, wobei Wasser oder eine Mischung aus Wasser und mindestens einem organischen Lösemittel bevorzugt ist,
E) O bis 10, vorzugsweise 4 bis 8 Gew.% eines gegebenenfalls ethoxilierten und/oder propoxilierten Polyols mit 2 bis 50, vorzugsweise 4 bis 20 C-Atomen im Molekül oder einer Mischung aus solchen Polyolen und
F) O bis 30, vorzugsweise 5 bis 20 Gew.% weiterer Hilfs- und Zusatzstoffe
besteht.

Mit dem erfindungsgemäßen Verfahren können Gegenstände, insbesondere Kunststoff-Furniere, hergestellt werden, die eine ausgezeichnete dreidimensionale Oberflächenstruktur aufweisen. Dies gelingt überraschenderweise auch dann, wenn die bedruckten Substrate mit Porendruckfarben bedruckt sind, die bei Anwendung der wäßrigen, hitzehärtbaren Lacke des Standes der Technik, die als Bindemittel hydroxylgruppenhaltige Harze in Kombination mit Aminoplastharzen enthalten, zur Ausbildung von Lackschichten mit dreidimensionaler Oberflächenstruktur führen. Das heißt, es müssen keine speziellen, auf die erfindungsgemäß eingesetzten Lacke abgestimmte Porendruckfarben eingesetzt werden, was bei der in der Praxis üblichen parallelen Verarbeitung von hitzehärtbaren und strahlenhärtbaren Lacken zu erheblichen wirtschaftlichen Vorteilen führt. Es wurde festgestellt, daß dieser überraschende Vorteil insbesondere auf die Anwesenheit der in strahlenhärtbaren Lacken üblicherweise nicht enthaltenen Komponente B in den erfindungsgemäß eingesetzten Lacken zurückzuführen ist.

Bei dem erfindungsgemäßen Verfahren wird kein Formaldehyd oder Methanol freigesetzt und es können Lackieranlagen mit geringem Raumbedarf eingesetzt werden. Die bei dem erfindungsgemäßen Verfahren eingesetzten Lacke weisen einen hohen Feststoffgehalt auf und können als Einkomponentensysteme gelagert werden.

Die Erfindung betrifft auch die nach dem erfindungsgemäßen Verfahren hergestellten Gegenstände sowie strahlenhärtbare Lacke, die kein Aminoplastharz enthalten und aus
A) 18 bis 99,9, vorzugsweise 49,5 bis 82,5 Gew.% eines Epoxiacrylates, eines Polyetheracrylates oder eines Polyesteracrylates oder einer Mischung aus diesen Acrylaten,
B) 0,1 bis 5,0, vorzugsweise 0,5 bis 1,5 Gew.% einer Brönsted Säure, einem Säureanhydrid, einer Mischung aus Brönsted Säuren, einer Mischung aus Säureanhydriden oder einer Mischung aus mindestens einer Brönsted Säure und mindestens einem Säureanhydrid
C) O bis 12, vorzugsweise 3 bis 6 Gew.% eines Photoinitiators oder einer Mischung aus Photoinitiatoren
D) 0 bis 40, vorzugsweise 5 bis 15 Gew.% Wasser oder mindestens eines organischen Lösemittels oder einer Mischung aus Wasser und mindestens einem organischen Lösemittel, wobei Wasser oder eine Mischung aus Wasser und mindestens einem organischen Lösemittel bevorzugt ist,
E) O bis 10, vorzugsweise 4 bis 8 Gew.% eines gegebenenfalls ethoxilierten und/oder propoxilierten Polyols mit 2 bis 50, vorzugsweise 4 bis 20 C-Atomen im Molekül oder einer Mischung aus solchen Polyolen und
F) O bis 30, vorzugsweise 5 bis 20 Gew.% weiterer Hilfs- und Zusatzstoffe
bestehen.

Mit den erfindungsgemäßen Lacken können nach dem obenbeschriebenen Verfahren unter Verwendung raumsparender Lackieranlagen Gegenstände mit ausgezeichneter dreidimensionaler Oberflächenstruktur hergestellt werden. Mit den erfindungsgemäßen Lacken können insbesondere Kunststoff-Furniere hergestellt werden, deren Oberflächen von Naturholzoberflächen kaum noch unterscheidbar sind. Dies gelingt auch dann, wenn die bedruckten Substrate mit Porendruckfarben bedruckt sind, die bei Anwendung der wäßrigen, hitzehärtbaren Lacke des Standes der Technik, die als Bindemittel hydroxylgruppenhaltige Harze in Kombination mit Aminoplastharzen enthalten, zur Ausbildung von Lackschichten mit dreidimensionaler Oberflächenstruktur führen. Das heißt, es müssen keine speziellen, auf die erfindungsgemäßen Lacke abgestimmte Porendruckfarben eingesetzt werden, was bei der in der Praxis üblichen parallelen Verarbeitung von hitzehärtbaren und strahlenhärtbaren Lacken zu erheblichen wirtschaftlichen Vorteilen führt. Es wurde festgestellt, daß dieser überraschende Vorteil insbesondere auf die Anwesenheit der Komponente B in den erfindungsgemäßen Lacken zurückzuführen ist.

Die erfindungsgemäßen Lacke weisen einen hohen Feststoffgehalt auf, setzen kein Formaldehyd frei und können als Einkomponentensysteme über lange Zeiträume gelagert werden.

Bei dem erfindungsgemäßen Verfahren wird in einem ersten Schritt ein Substrat bedruckt, wobei mindestens eine der zur Bedruckung eingesetzten Druckfarben lackabstoßend ist. Dieser erste Arbeitsschritt des erfindungsgemäßen Verfahrens ist gut bekannt und wird beispielsweise in der DE-A-33 14 610, EP-A-43 062 und DE-A-32 47 677 ausführlich beschrieben.

Als Substrate können alle bedruckbaren Substrate, wie z.B. Holz, insbesondere Platten aus Holz, Holzwerkstoffe (z.B. Spanplatten, Hartfaserplatten und mitteldichte Faserplatten), insbesondere Platten aus Holzwerkstoffen und Kunststoffe, insbesondere Folien aus Kunststoff, eingesetzt werden. Als Substrate werden bevorzugt Papierfolien mit einem Quadratmetergewicht von 30 bis 250 Gramm eingesetzt. Es können sowohl Papierfolien, die noch keine Imprägnierung mit einem Kunstharz aufweisen als auch vorimprägnierte Papierfolien als Substrate eingesetzt werden.

Das bedruckte Substrat wird anschließend lackiert, wobei die oben beschriebenen, aus den Komponenten A bis F bestehenden strahlenhärtbaren Lacke eingesetzt werden.

Als Komponente A wird ein Epoxiacrylat, ein Polyetheracrylat, ein Polyesteracrylat oder eine Mischung aus diesen Acrylaten eingesetzt.

Unter Epoxiacrylaten werden Umsetzungsprodukte aus epoxidgruppenhaltigen Verbindungen, wie z.B Epoxidharzen auf Basis von Bisphenol A, und Acryl- und/oder Methacrylsäure verstanden. Epoxiacrylate sind bekannt und in großer Auswahl im Handel erhältlich. Vorzugsweise werden Epoxiacrylate mit einem Doppelbindungsäquivalentgewicht von 1 bis 4 mol/kg sowie einem zahlenmittleren Molekulargewicht von 400 bis 1500 eingesetzt. Geeignete Epoxiacrylate werden beispielsweise in Richard Holman, UV and EB curing formulations for printing inks, coatings and paints, Sita Technology 203, Gardian House, Broonhill Road, London, SW 18, ISBN 0947798021, beschrieben.

Unter Polyetheracrylaten werden Umsetzungsprodukte aus Polyetherpolyolen und Acryl- und/oder Methacrylsäure verstanden. Polyetheracrylate sind bekannt und in großer Auswahl im Handel erhältlich. Es werden vorzugsweise Polyetheracrylate eingesetzt, die ein Doppelbindungsäquivalentgewicht von 1 bis 7 mol/kg sowie ein zahlenmittleres Molekulargewicht von 400 bis 2000 aufweisen. Geeignete Polyetheracrylate werden beispielsweise in der DE-A-33 16 593 und in der DE-A-38 36 370 beschrieben.

Unter Polyesteracrylaten werden Umsetzungsprodukte aus Polyesterpolyolen und Acryl- und/oder Methacrylsäure verstanden. Polyesteracrylate sind bekannt und in großer Auswahl im Handel erhältlich. Bevorzugt werden Polyesteracrylate eingesetzt, die ein Doppelbindungsäquivalentgewicht von 1 bis 5 mol/kg sowie ein zahlenmittleres Molekulargewicht von 500 bis 2000 aufweisen. Geeignete Polyesteracrylate werden beispielsweise in der DE-A-33 16 593 und in der DE-A-38 36 370 beschrieben.

Als Komponente A kann ein Epoxiacrylat, eine Mischung aus Epoxiacrylaten, ein Polyetheracrylat, eine Mischung aus Polyetheracrylaten, ein Polyesteracrylat, eine Mischung aus Polyesteracrylaten, oder eine Mischung aus diesen Acrylaten eingesetzt werden.

Als Komponente B wird in den erfindungsgemäß eingesetzten Lacken eine Brönsted Säure, ein Säureanhydrid, eine Mischung aus Brönsted Säuren, eine Mischung aus Säureanhydriden oder eine Mischung aus mindestens einer Brönsted Säure und mindestens einem Säureanhydrid eingesetzt. Vorzugsweise wird Phosphorsäure, Zitronensäure, para-Toluolsulfonsäure, Fumarsäure, Maleinsäure, Maleinsäureanhydrid oder eine Mischung aus diesen Säuren bzw. Säureanhydriden eingesetzt.

Als Komponente C können die erfindungsgemäß eingesetzten Lacke einen Photoinitiator oder eine Mischung aus Photoinitiatoren enthalten. Als Photoinitiatoren können beispielsweise Benzophenon, Benzophenonderivate, Benzoin, Benzoinderivate, insbesondere Benzoinether, Benzil, Benzilderivate, Acetophenon, Acetophenonderivate, Thioxanthon, Thioxanthonderivate und Antrachinon oder Antrachinonderivate eingesetzt werden. Diese bekannten Photoinitiatoren können ggf. mit synergistisch wirkenden Verbindungen, wie z. B. Trialkylaminen, Dialkylmonohydroxyalkylaminen und Monoalkyldihydroxyalkylamine kombiniert werden. Wenn die erfindungsgemäß eingesetzten Lacke mit Hilfe von ionisierender Strahlung, wie z. B. Elektronenstrahlen gehärtet werden sollen, dann kann auf eine Zugabe der Komponente C verzichtet werden.

Als Komponente D können die erfindungsgemäß eingesetzten Lacke Wasser oder mindestens ein organisches Lösemittel oder eine Mischung aus Wasser und mindestens einem organischen Lösemittel enthalten. Als organische Lösemittel können beispielsweise Butylacetat, Methoxypropanol, Propylenglykol und Butylenglykol eingesetzt werden. Die erfindungsgemäß eingesetzten Lacke enthalten als Komponente D vorzugsweise Wasser oder eine Mischung aus Wasser und mindestens einem organischen Lösemittel.

Die erfindungsgemäß eingesetzten Lacke können als Komponente E gegebenenfalls ethoxylierte und/oder propoxylierte Polyole mit 2 bis 50, vorzugsweise 4 bis 20 C-Atomen, im Molekül enthalten. Als Beispiele für derartige Polyole werden genannt: Ethylenglykol, ethoxyliertes und/oder propoxyliertes Ethylenglykol, Propylenglykol, ethoxyliertes und/oder propoxyliertes Propylenglykol, Butylenglykol, ethoxyliertes und/oder propoxyliertes Butylenglykol, Glycerin, ethoxyliertes und/oder propoxyliertes Glycerin, Dimethylolpropan, ethoxyliertes und/oder propoxyliertes Dimethylolpropan, Pentaerythrit, ethoxyliertes und/oder propoxyliertes Pentaerythrit, Neopentylglykol, ethoxyliertes und/oder propoxyliertes Neopentylglykol, Trimethylolpropan, ethoxyliertes und/oder propoxyliertes Trimethylolpropan und Hexandiol-1,6, ethoxyliertes und/oder propoxyliertes Hexandiol-1,6.

Als Komponente F können die erfindungsgemäßen Lacke weitere Hilfs- und Zusatzstoffe, beispielsweise Füllstoffe, wie z. B. Kieselsäure, Silikate, Bariumsulfat, Talkum, Kaolin und Korkmehl, übliche farbgebende Substanzen oder Pigmente, Verlaufshilfsmittel, Antischaummittel, Absetzverhinderungsmittel und Thixotropierungsmittel enthalten.

Die Lackierung der bedruckten Substrate kann mit Hilfe bekannter Applikationsmethoden, wie z. B. Spritzen, Rakeln, Gießen oder Walzen durchgeführt werden. Die aufgebrachten Lackfilme werden durch Bestrahlen mit energiereicher Strahlung, wie z.B. durch Bestrahlung mit Elektronenstrahlen oder UV Strahlung gehärtet. Diese Verfahren zur Härtung von Lackfilmen sind bekannt und werden beispielsweise im Glasurit Handbuch Lacke und Farben, Curt R. Vincentz Verlag, Hannover, 1984 auf den Seiten 415 bis 418 beschrieben.

In den nachfolgenden Beispielen wird die Erfindung näher erläutert. Alle Angaben über Teile und Prozente sind als Gewichtsangaben zu verstehen, wenn nicht ausdrücklich etwas anderes angegeben ist.

### 1. Herstellung erfindungsgemäßer Lacke

### 1.1 Lack I

Durch inniges Vermischen wird aus folgenden Komponenten ein mit UV-Strahlung härtbarer Lack hergestellt:
30 Teile eines Epoxiacrylates (Laromere® LR 8765, Hersteller: BASF AG);
42 Teile eines Polyetheracrylates (Halwecure® TN 5236, Hersteller: Hüttenes Albertus Chem. Werke GmbH, Düsseldorf, Deutschland);
9 Teile Polyol TP08 (ethoxiliertes Trimethylolpropan, Hersteller: Perstorp AB);
5 Teile Benzophenon;
1,1 Teile eines handelsüblichen Benetzungshilfsmittels;
1,4 Teile eines handelsüblichen Entschäumungsmittels;
0,6 Teile Polypropylenwachs;
2,4 Teile eines Rheologiehilfsmittels auf Basis von Kieselsäure und
8,5 Teile einer 12 gewichtsprozentigen wäßrigen Zitronensäurelösung.

### 1.2 Lack II

Lack II wird wie Lack I hergestellt. Anstelle der 30 Teile Epoxiacrylat und 42 Teile Polyetheracrylat werden jedoch 72 Teile des zur Herstellung von Lack I verwendeten Epoxiacrylates eingesetzt.

### 1.3 Lack III

Lack II wird wie Lack I hergestellt. Anstelle der 30 Teile Epoxiacrylat und 42 Teile Polyetheracrylat werden jedoch 72 Teile des zur Herstellung von Lack I verwendeten Polyetheracrylates eingesetzt.

### 2. Herstellung von Kunststoff-Furnieren nach dem erfindungsgemäßen Verfahren

Die erfindungsgemäßen Lacke werden auf handelsübliche, mit einem unter Verwendung von lackabstoßenden Druckfarben hergestellten Holzmusterdruck versehene, vorimprägnierte Papierfolien in einer Menge von 10 g pro m² Papierfolie aufgerakelt und durch UV-Strahlung gehärtet. Es werden Kunststoff-Furniere erhalten, deren Oberflächen von den entsprechenden Naturholzoberflächen kaum unterscheidbar sind.

## Patentansprüche

1. Verfahren zur Herstellung von Gegenständen mit einer dreidimensionalen Oberflächenstruktur, bei dem ein Substrat bedruckt wird, wobei mindestens eine der zur Bedruckung eingesetzten Druckfarben lackabstoßend ist, und das bedruckte Substrat anschließend lackiert wird, dadurch gekennzeichnet, daß das bedruckte Substrat mit einem strahlenhärtbaren Lack lackiert und die aufgebrachte Lackschicht mit energiereicher Strahlung gehärtet wird, wobei der strahlenhärtbare Lack kein Aminoplastharz enthält und aus
A) 18 bis 99,9 Gew.% eines Epoxiacrylates, eines Polyetheracrylates oder eines Polyesteracrylates oder einer Mischung aus diesen Acrylaten,
B) 0,1 bis 5,0 Gew.% einer Brönsted Säure, einem Säureanhydrid, einer Mischung aus Brönsted Säuren, einer Mischung aus Säureanhydriden oder einer Mischung aus mindestens einer Brönsted Säure und mindestens einem Säureanhydrid,
C) O bis 12 Gew.% eines Photoinitiators oder einer Mischung aus Photoinitiatoren,
D) 0 bis 40 Gew.% Wasser oder mindestens eines organischen Lösemittels oder einer Mischung aus Wasser und mindestens einem organischen Lösemittel,
E) O bis 10 Gew.% eines gegebenenfalls ethoxilierten und/oder propoxilierten Polyols mit 2 bis 50 C-Atomen im Molekül oder einer Mischung aus solchen Polyolen und
F) O bis 30 Gew.% weiterer Hilfs- und Zusatzstoffe
besteht.

2. Verfahren nach Anspruch 1, dadurch gekennzeichnet, daß das bedruckte Substrat eine bedruckte Papierfolie, eine bedruckte Platte aus Holz oder Holzwerkstoff oder eine bedruckte Folie aus Kunststoff ist.

3. Verfahren nach Anspruch 1 oder 2, dadurch gekennzeichnet, daß als Komponente A) ein Epoxiacrylat oder ein Polyetheracrylat oder eine Mischung aus einem Epoxiacrylat und einem Polyetheracrylat eingesetzt wird.

4. Verfahren nach einem der Ansprüche 1 bis 3, dadurch gekennzeichnet, daß als Komponente B) Phosphorsäure, Zitronensäure, para-Toluolsulfonsäure, Maleinsäure, Maleinsäureanhydrid oder eine Mischung aus diesen Säuren bzw. Säureanhydriden eingesetzt wird.

5. Strahlenhärtbare Lacke, dadurch gekennzeichnet, daß sie kein Aminoplastharz enthalten und aus
A) 18 bis 99,9 Gew.% eines Epoxiacrylates, eines Polyetheracrylates oder eines Polyesteracrylates oder einer Mischung aus diesen Acrylaten,
B) 0,1 bis 5,0 Gew.% einer Brönsted Säure, einem Säureanhydrid, einer Mischung aus Brönsted Säuren, einer Mischung aus Säureanhydriden oder einer Mischung aus mindestens einer Brönsted Säure und mindestens einem Säureanhydrid
C) O bis 12 Gew.% eines Photoinitiators oder einer Mischung aus Photoinitiatoren
D) 0 bis 40 Gew.% Wasser oder mindestens eines organischen Lösemittels oder einer Mischung aus Wasser und mindestens einem organischen Lösemittel,
E) O bis 10 Gew.% eines gegebenenfalls ethoxilierten und/oder propoxilierten Polyols mit 2 bis 50, vorzugsweise 4 bis 20 C-Atomen im Molekül oder einer Mischung aus solchen Polyolen und
F) O bis 30 Gew.% weiterer Hilfs- und Zusatzstoffe
bestehen.

6. Strahlenhärtbare Lacke nach Anspruch 5, dadurch gekennzeichnet, daß sie als Komponente A) ein Epoxiacrylat oder ein Polyetheracrylat oder eine Mischung aus einem Epoxiacrylat und einem Polyetheracrylat enthalten.

7. Strahlenhärtbare Lacke nach Anspruch 5 oder 6, dadurch gekennzeichnet, daß sie als Komponente B) Phosphorsäure, Zitronensäure, para-Toluolsulfonsäure, Maleinsäure, Maleinsäureanhydrid oder eine Mischung aus diesen Säuren bzw. Säureanhydriden enthalten.

## Claims

1. Process for the preparation of articles with a three-dimensional surface structure, in which a substrate is printed, at least one of the printing inks employed for the printing being varnish-repellent, and the printed substrate is then varnished, characterized in that the printed substrate is varnished with a radiation-curable varnish and the varnish coat applied is cured with high-energy radiation, the radiation-curable varnish containing no amino resin and comprising
A) from 18 to 99.9% by weight of an epoxy acrylate, a polyether acrylate or a polyester acrylate, or of a mixture of these acrylates,
B) from 0.1 to 5.0% by weight of a Brönsted acid, an acid anhydride, a mixture of Brönsted acids, a mixture of acid anhydrides or a mixture of at least one Brönsted acid and at least one acid anhydride,
C) from O [sic] to 12% by weight of a photoinitiator, or of a mixture of photoinitiators,
D) from 0 to 40% by weight of water or of at least one organic solvent or of a mixture of water and at least one organic solvent,
E) from O [sic] to 10% by weight of a polyol which may be ethoxylated and/or propoxylated and has from 2 to 50 carbon atoms in the molecule, or of a mixture of such polyols, and
F) from O [sic] to 30% by weight of other auxiliaries and additives.

2. Process according to Claim 1, characterized in that the printed substrate is a printed paper sheet, a printed panel of wood or wood material or a printed plastic sheet.

3. Process according to Claim 1 or 2, characterized in that as component A) an epoxy acrylate or a polyether acrylate or a mixture of an epoxy acrylate and a polyether acrylate is employed.

4. Process according to one of Claims 1 to 3, characterized in that as component B) phosphoric acid, citric acid, para-toluenesulfonic acid, maleic acid, maleic anhydride or a mixture of these acids and/or acid anhydrides is employed.

5. Radiation-curable varnishes, characterized in that they contain no amino resin and comprise.
A) from 18 to 99.9% by weight of an epoxy acrylate, a polyether acrylate or a polyester acrylate, or of a mixture of these acrylates,
B) from 0.1 to 5.0% by weight of a Brönsted acid, an acid anhydride, a mixture of Brönsted acids, a mixture of acid anhydrides or a mixture of at least one Brönsted acid and at least one acid anhydride,
C) from O [sic] to 12% by weight of a photoinitiator, or of a mixture of photoinitiators,
D) from 0 to 40% by weight of water or of at least one organic solvent or of a mixture of water and at least one organic solvent,
E) from O [sic] to 10% by weight of a polyol which may be ethoxylated and/or propoxylated and has from 2 to 50 carbon atoms in the molecule, or of a mixture of such polyols, and
F) from O [sic] to 30% by weight of other auxiliaries and additives.

6. Radiation-curable varnishes according to Claim 5, characterized in that they contain as component A) an epoxy acrylate or a polyether acrylate or a mixture of an epoxy acrylate and a polyether acrylate.

7. Radiation-curable varnishes according to Claim 5 or 6, characterized in that they contain as component B) phosphoric acid, citric acid, para-toluenesulphonic acid, maleic acid, maleic anhydride or a mixture of these acids and/or acid anhydrides.

## Revendications

1. Procédé de fabrication d'articles ayant une structure superficielle tridimensionelle, lors duquel on imprime un substrat, au moins l'une des encres d'impressions utilisées en vue de l'impression étant répulsive aux peintures, et l'on procède ensuite à la peinture du substrat imprimé, caractérisé en ce que le substrat imprimé est peint avec une peinture durcissable sous irradiation et que la couche de peinture appliquée est durcie à l'aide d'un rayonnement de haute énergie, la peinture durcissable sous irradiation ne contenant aucune résine aminoplaste et se composant
(A) de 18 à 99,9 % en poids d'un époxyacrylate, d'un polyétheracrylate ou d'un polyesteracrylate ou d'un mélange de ces acrylates,
(B) de 0,1 à 5,0 % en poids d'un acide de Brönsted, d'un anhydride d'acide, d'un mélange d'acides de Brönsted, d'un mélange d'anhydrides d'acides, ou un mélange d'au moins un acide de Brönsted et d'au moins un anhydride d'acide,
(C) de 0 à 12 % en poids d'un photoamorceur ou d'un mélange de photoamorceurs,
(D) de 0 à 40 % en poids d'eau ou d'au moins un solvant organique ou d'un mélange d'eau et d'au moins un solvant organique,
(E) de 0 à 10 % en poids d'un polyol, le cas échéant, éthoxylé et/ou propoxylé, ayant de 2 à 50 atomes de C dans la molécule, ou un mélange de polyols de ce genre et
(F) de 0 à 30 % en poids d'auxiliaires et d'adjuvants supplémentaires.

2. Procédé selon la revendication 1, caractérisé en ce que le substrat imprimé est une feuille en papier imprimée, une plaque imprimée en bois ou en matériau ligneux ou une feuille imprimée en matière synthétique.

3. Procédé selon la revendication 1 ou 2, caractérisé en ce que l'on utilise, en tant que composant A), un époxyacrylate ou un polyétheracrylate ou un mélange d'un époxyacrylate et d'un polyétheracrylate.

4. Procédé selon l'une quelconque des revendications 1 à 3, caractérisé en ce que l'on utilise, en tant que composant B), l'acide phosphorique, l'acide citrique, l'acide para-toluènesulfonique, l'acide maléique, l'anhydride maléique ou un mélange de ces acides, ou de ces anhydrides d'acide.

5. Peintures durcissables sous irradiation, caractérisées en ce qu'elles ne contiennent aucune résine aminoplaste et se composent
(A) de 18 à 99,9 % en poids d'un époxyacrylate, d'un polyétheracrylate ou d'un polyesteracrylate ou d'un mélange de ces acrylates,
(B) de 0,1 à 5,0 % en poids d'un acide de Brönsted, d'un anhydride d'acide, d'un mélange d'acides de Brönsted, d'un mélange d'anhydrides d'acides, ou un mélange d'au moins un acide de Brönsted et d'au moins un anhydride d'acide,
(C) de 0 à 12 % en poids d'un photoamorceur ou d'un mélange de photoamorceurs,
(D) de 0 à 40 % en poids d'eau ou d'au moins un solvant organique ou d'un mélange d'eau et d'au moins un solvant organique,
(E) de 0 à 10 % en poids d'un polyol, le cas échéant, éthoxylé et/ou propoxylé, ayant de 2 à 50, de préférence de 4 à 20 atomes de C dans la molécule, ou un mélange de polyols de ce genre et
(F) de 0 à 30 % en poids d'auxiliaires et d'adjuvants supplémentaires.

6. Peintures durcissables sous irradiation selon la revendication 5, caractérisées en ce qu'elles contiennent en tant que composant A) un époxyacrylate ou un polyétheracrylate ou un mélange d'un époxyacrylate et d'un polyétheracrylate.

7. Peintures durcissables sous irradiation selon la revendication 5 ou 6, caractérisées en ce qu'elles contiennent en tant que composant B) l'acide phosphorique, l'acide citrique, l'acide para-toluènesulfonique, l'acide maléique, l'anhydride maléique ou un mélange de ces acides, ou de ces anhydrides d'acide.
